# EUROPEAN PATENT SPECIFICATION

(11) **EP 0 863 079 B1**
(45) Date of publication and mention of the grant of the patent: **09.06.2004**
(21) Application number: 98103831.8
(22) Date of filing: 04.03.1998
(51) Int. Cl.: B65B 51/14

(54) **Method and device for wrapping packets of cigarettes**
Verfahren und Vorrichtung zum Verpacken von Zigarettenpackungen
Procédé et dispositif pour emballer des paquets de cigarettes

(30) Priority: 06.03.1997 IT BO970124
(43) Date of publication of application: 09.09.1998
(73) Proprietor: G.D SOCIETA' PER AZIONI, 40133 Bologna (BO) (IT)
(72) Inventor: Draghetti, Fiorenzo, 40059 Medicina (IT); Brizzi, Marco, 40069 Zola Predosa (IT); Federici, Luca, 40135 Bologna (IT)
(74) Representative: Jorio, Paolo

(56) References cited:
- EP-A- 0 463 360
- FR-A- 2 277 732
- GB-A- 2 128 543
- US-A- 3 692 611

## Description

The present invention relates to a device of wrapping packets of cigarettes.

Machines for wrapping packets of cigarettes are known in which the packets, arranged in an orderly succession, are fed by a conveyor, normally a conveyor wheel, in steps and at a given rate along a wrapping path and through a first wrapping station, in which each packet is assigned a respective sheet of heat-seal wrapping material, one or more successive wrapping stations, in which the sheet of wrapping material is gradually folded about the packet so that one or more portions of the sheet are superimposed on other portions, and one or more heat-seal stations, in which a heat-seal element is brought into contact with the sheet of wrapping material to firmly connect the superimposed portions of the sheet.

Each heat-seal element is moved between a work position, contacting a sheet of wrapping material for heat-sealing, and a rest position, detached from the wrapping path, by an actuating device operating in time with the conveyor and for imparting to the heat-seal element a work cycle in which the lengths of the various phases have a constant ratio, but obviously vary in absolute value as a function of the feed rate of the conveyor, i.e. the speed of the wrapping machine.

The work cycle of the heat-seal elements is normally calibrated as a function of the normal operating speed of the wrapping machine (usually close to the maximum speed of the machine), i.e. is so calibrated that heat-seal time is best when the wrapping machine is run at normal operating speed. When, however, the wrapping machine is run for any reason at a slower speed, the heat-seal time is obviously prolonged, thus resulting in possible burning of the sheets of wrapping material.

It has been thought to solve the problem by regulating the temperature of the heat-seal elements as a function of machine speed. Such a solution, however, has proved ineffective on account of the high degree of thermal inertia of the heat-seal elements.

GB2128543 discloses a heat-sealing tool for closing the thermoplastic transparent outer wrappers of cigarette packs in a cigarette packing machine; the heat-sealing tool is pivoted intermittently into engagement with the wrappers of successive packs while the indexible turret which transports the packs is idle. The tool is held in engagement with each of a series of wrappers for the same interval of time irrespective of the speed of the prime mover which drives the turret; to this end, the tool is pivotable by a rotary disc-shaped cam which is driven by a variable-speed motor whose operation is regulated by a control circuit including a function generator. Alternatively, the tool is actuated by a transmission which receives motion from the prime mover and is adjusted when the speed of the prime mover changes.

US3692611 discloses a sealing apparatus for the making of plastic bags or similar receptacles and wherein the intervals of engagement between a heat-transmitting tool and successive commodities are regulated by a time-delay element which can control the flow of a fluid to a cylinder serving to adjust a lever which carries the tool.

It is an object of the present invention to provide a device of wrapping packets of cigarettes in sheets of heat-seal material on a wrapping machine, and which prevents the sheets from being damaged in the event of a variation in the operating speed of the wrapping machine.

According to the present invention, there is provided a device of wrapping packets of cigarettes as recited by claim 1.

A non-limiting embodiment of the present invention will be described by way of example with reference to the accompanying drawings, in which:
Figures 1, 2, 3 show schematic views, with parts removed for clarity, of a preferred embodiment of the wrapping device according to the present invention, in different operating positions;
Figure 4 shows a schematic view, with parts removed for clarity, of a variation of the Figure 1 device;
Figure 5 shows a view in perspective of a detail of the Figure 4 device.

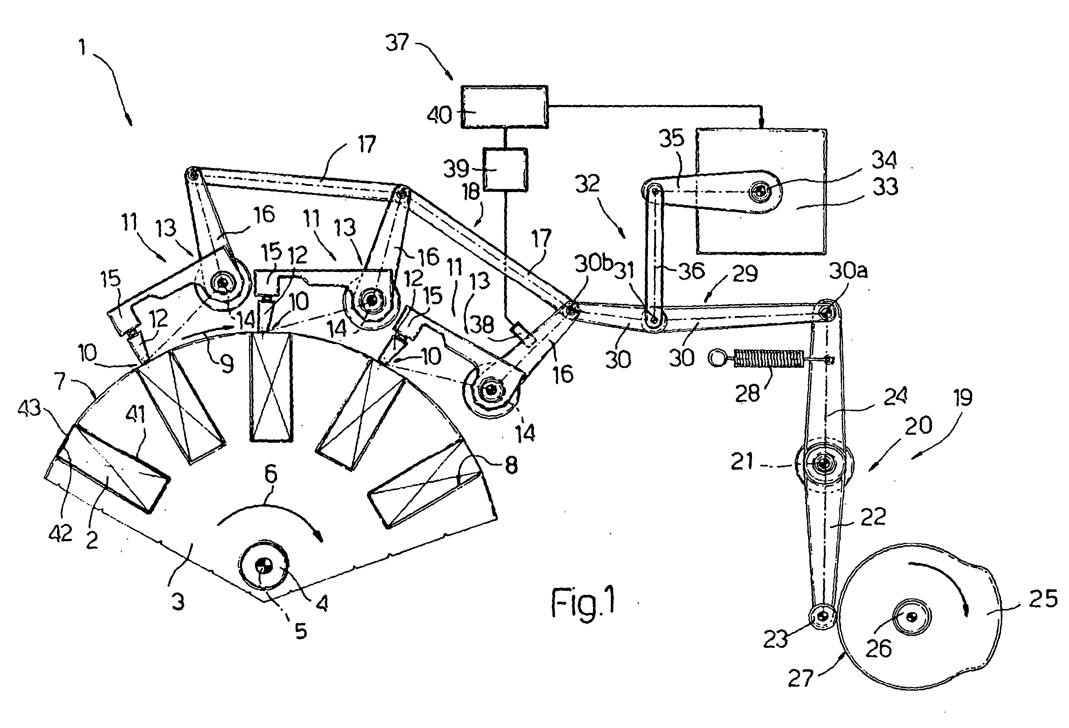

Number 1 in Figures 1, 2, 3 indicates as a whole a device for wrapping packets 2 of cigarettes.

Device 1 comprises a wrapping wheel 3, which is supported centrally by a shaft 4 coaxial with a horizontal axis 5, and is activated intermittently by drive devices (not shown) to rotate in steps in a clockwise direction 6 in the accompanying drawings. Wheel 3 is defined externally by a substantially cylindrical lateral surface 7 having a number of pockets 8 equally spaced about axis 5. Each pocket 8 houses and feeds a respective packet 2 along a wrapping path 9 and through a number of heat-seal stations 10, which the same number of pockets 8 are positioned facing at each step in the rotation of wheel 3.

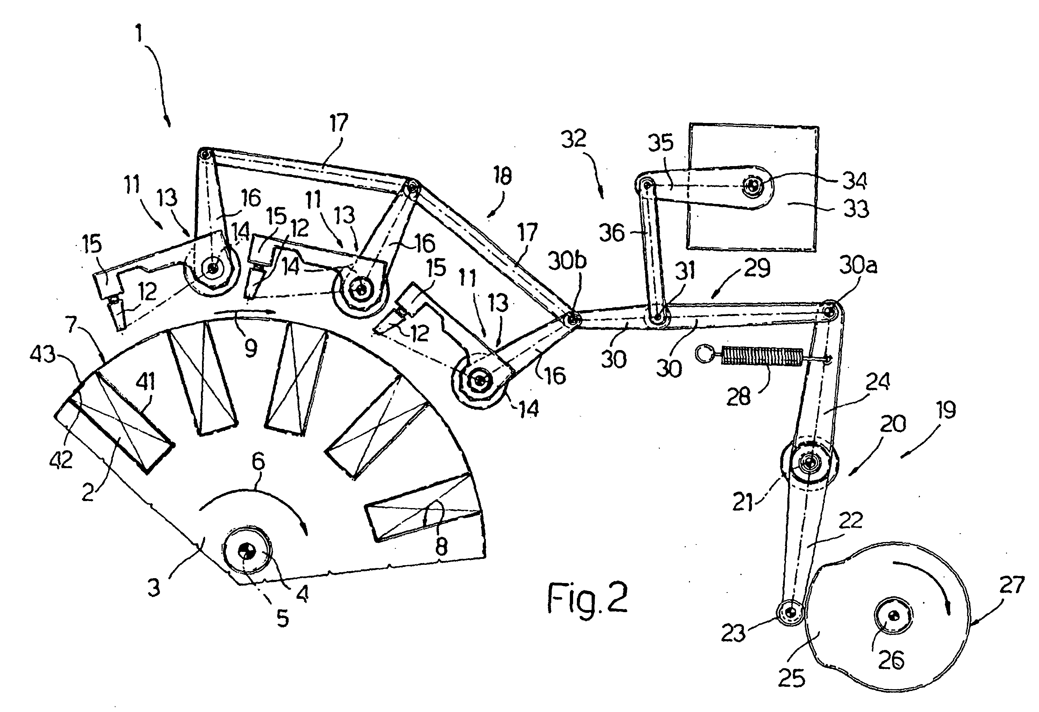

Machine 1 also comprises a number of heat-seal elements 11 facing surface 7 at respective heat-seal stations 10. Each element 11 comprises a heat-seal head 12 facing surface 7 at respective station 10; and a rocker arm 13 hinged to a frame (not shown) to rotate, with respect to the frame (not shown), about an axis 14 parallel to axis 5, and to move head 12 between a rest position (Figure 2) in which head 12 is positioned a given distance from surface 7 and path 9, and a work position (Figure 1) in which head 12 is substantially tangent to surface 7 and path 9.

Rocker arm 13 comprises a first arm 15 fitted integrally at the free end with head 12; and a second arm 16 substantially perpendicular to arm 15 and connected in series, at the free end, to the free ends of arms 16 of the other heat-seal elements 11 by a succession of connecting rods 17 forming part of an articulated transmission 18 of an actuating device 19 of device 1.

In addition to connecting rods 17, device 19 also comprises a rocker arm 20 hinged to said frame (not shown) to rotate, with respect to the frame, about an axis 21 parallel to axis 5, and which in turn comprises a first arm 22 fitted at the free end with a tappet roller 23, and a second arm 24 substantially coaxial with arm 22.

Device 19 also comprises a cam 25 fitted to a shaft 26 parallel to axis 5, and having an outer track 27 cooperating, with the aid of a spring 28, with roller 23 to swing rocker arm 20 about axis 21.

In addition to connecting rods 17, transmission 18 also comprises a caliper element 29 connecting the free ends of arm 24 and one of arms 16, and in turn comprising a pair of connecting rods 30 hinged to each other by a pin 31 parallel to axis 5, and hinged respectively to the free end of arm 24 by a hinge 30a, and to the free end of one of arms 16 by a hinge 30b.

Device 1 also comprises a further actuating device 32, in turn comprising a motor 33, the output shaft 34 of which is parallel to axis 5 and fitted with a crank 35, the free end of which is hinged to a connecting rod 36 for connecting crank 35 in articulated manner to pin 31. Device 32 forms part of a control device 37, which, in addition to device 32, also comprises a sensor 38 associated with transmission 18 to detect displacement of heads 12 and to emit a signal when heads 12 reach the work position. Device 37 also comprises a counter 39, which is activated by the signal emitted by sensor 38 to measure a time lapse commencing from when heads 12 reach the work position; and a central control unit 40, which, after a given time lapse measured by counter 39, activates motor 33 to move pin 31 transversely by means of cranks 35 and 36, and so reduce the distance between hinges 30a and 30b to rotate rocker arms 13 clockwise in Figures 1-3 about respective axes 14.

In actual use, packets 2 are fed successively into pockets 8 together with respective sheets 41 of wrapping material, each of which is first folded into a U about respective packet 2, and is then further folded so that two opposite portions 42 and 43 are superimposed one on top the other for heat-sealing in that position by heat-seal elements 11. Cam 25 makes one complete turn about the axis of shaft 26 for each step in the rotation of wheel 3, and so imparts to heat-seal elements 11, at each step of wheel 3, a given operating cycle in which each head 12 is moved into the rest position (Figure 2) as wheel 3 commences each step, and remains in the rest position substantially until the step is completed. Subsequently, each head 12 is moved into and maintained for a given time in the work position (Figure 1) as wheel 3 is arrested between one step and the next.

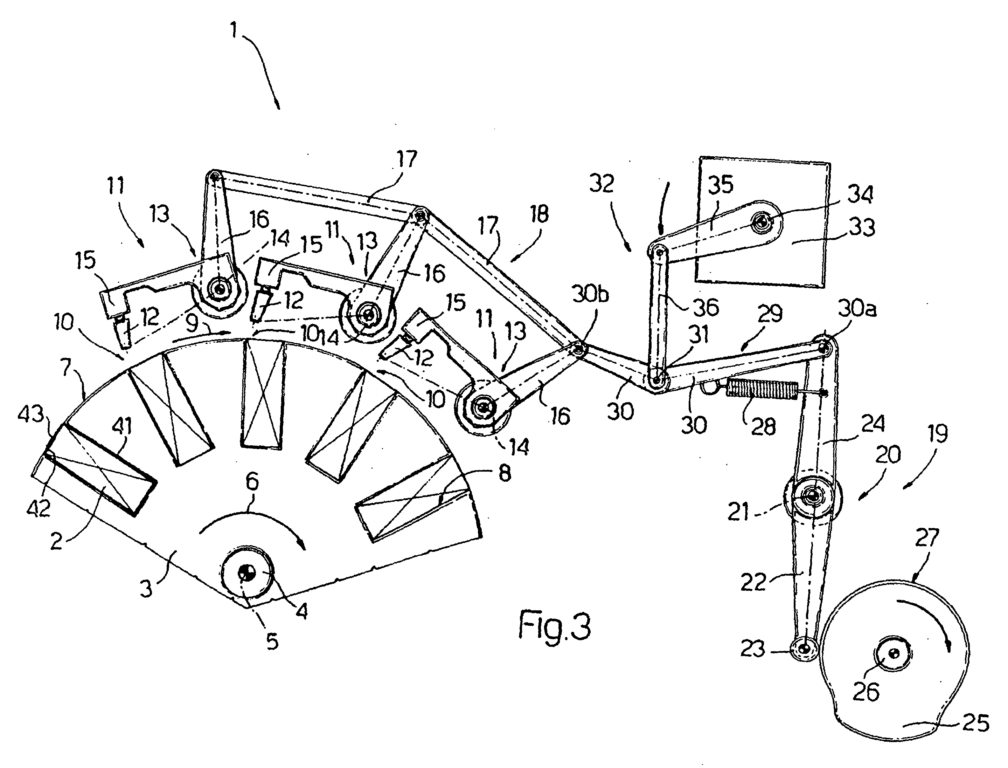

The length of time heads 12 remain in the work position, i.e. the heat-seal time, is therefore directly proportional to the length of the operating cycle and inversely proportional to the feed rate of wheel 3, so that the likelihood of sheets 41 being in any way damaged by heat-seal elements 11 increases as the feed rate of wheel decreases. In particular, a limit rate exists at which said heat-seal time equals a maximum permissible time set in counter 39; and, in the event the feed rate drops below the limit rate, counter 39 sends a signal to central control unit 40, which activates motor 33 to detach heads 12 from respective packets 2 (Figure 3) as described previously.

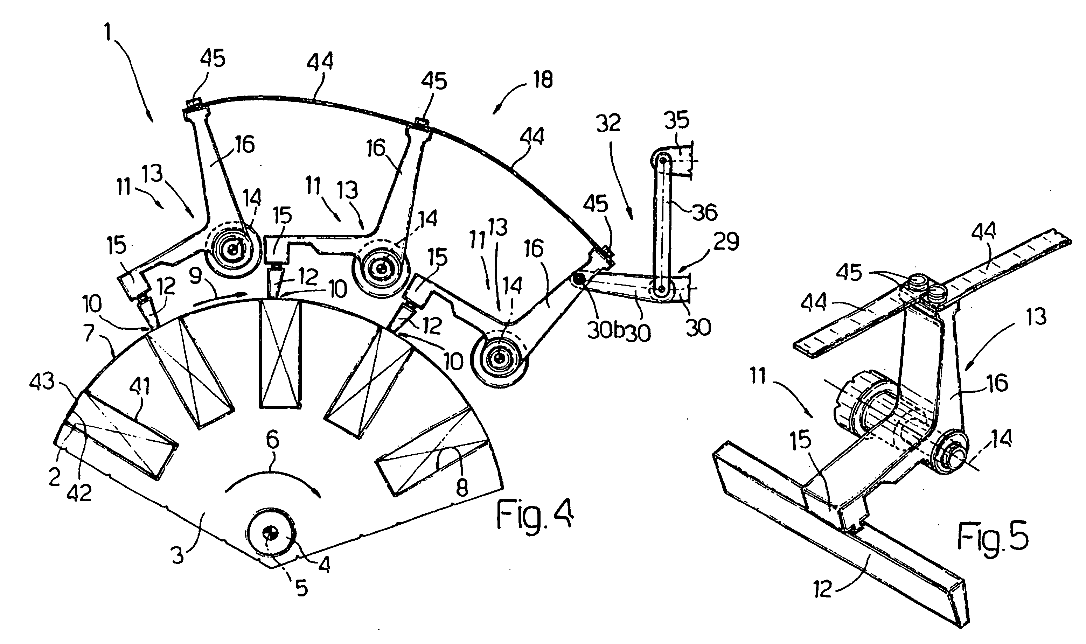

In the variation of Figures 4 and 5, connecting rods 17 are defined by leaf springs 44 fixed to the free ends of arms 16 by screws 45, and which have the advantage of ensuring heads 12 are brought into contact with packets 2 with a given amount of pressure. Leaf springs 44 in fact are so formed as to ensure overtravel of heads 12 into the work position, so that, when the work position is reached, the overtravel loads leaf springs 44 axially, thus causing collapse of leaf springs 44 due to combined bending and compressive stress when the contact pressure between heads 12 and respective packets 2 reaches a given value.

## Claims

1. A device for wrapping packets of cigarettes, and comprising a conveyor (3) for feeding an orderly succession of packets (2) in steps and at a given rate along a wrapping path (9), along which a sheet (41) of heat-seal wrapping material is folded about each packet (2) so that at least a first and a second portion (42, 43) of the sheet (41) are superimposed one on top of the other; at least one heat-seal station (10) located along said path (9); a movable heat-seal element (11) located at said heat-seal station (10); and first actuating means (19) connected to said heat-seal element (11), and by which said heat-seal element (11) is moved into and maintained for a given heat-seal time in a heat-seal work position, in which the heat-seal element (11) is positioned contacting said sheet (41) at the superimposed said portions (42, 43) of the sheet (41); said heat-seal time being a function of said rate; the device being **characterized by** also comprising counting means (39) for measuring said heat-seal time; and second actuating means (37) interacting with said first actuating means (19) independently of said rate to withdraw the heat-seal element (11) from the work position when said heat-seal time exceeds a given limit value; said first actuating means (19) comprising actuating means (25) having a movable output member (20), and a transmission (18) interposed between said movable output member (20) and the heat-seal element (11); said transmission (18) comprising a portion (29) of variable length; and said second actuating means (37) varying said length to compensate for a movement imparted by said first actuating means (19); said portion (29) of variable length comprising a caliper (29) defined by two connecting rods (30) hinged to each other by an intermediate pin (31), and hinged respectively to said movable output member (20) by a first hinge (30a), and to said heat-seal element (11) by a second hinge (30b); and said second actuating means (37) being connected to said intermediate pin (31) to vary a distance between said first and said second hinge (30a, 30b).

2. A device as claimed in Claim 1, wherein said first actuating means (19) comprise a powered cam (25) rotating about a respective axis; said movable output member (20) comprising a rocker arm (20) having a first end connected to said cam (25) by a tappet (23), and a second end hinged to one end of said transmission (18).

## Patentansprüche

1. Vorrichtung zum Verpacken von Zigarettenpackungen, umfassend: einen Förderer (3) zum Zuführen einer geordneten Folge von Packungen (2) in Schritten und mit einer vorgegebenen Geschwindigkeit längs einer Verpackungsbahn (9), entlang welcher ein Blatt (41) aus heißsiegelfähigem Verpackungsmaterial um jede Packung (2) so gefaltet wird, dass mindestens ein erster und ein zweiter Bereich (42, 43) des Blattes (41) mit dem einen auf der Oberseite des anderen überlagert ist; mindestens eine Heißsiegelstation (10), die entlang der Bahn (9) angeordnet ist; ein bewegliches Heißsiegelelement (11), welches in der Heißsiegelstation (10) angeordnet ist; und eine erste Betätigungseinrichtung (19), die mit dem Heißsiegelelement (11) verbunden ist und durch welche das Heißsiegelelement (11) in eine Heißsiegelposition bewegt und für eine vorgegebene Heißsiegelzeit in dieser gehalten wird, wobei das Heißsiegelelement (11) so angeordnet ist, dass es das Blatt (41) an den überlagerten Bereichen (42, 43) des Blattes (41) berührt; und die Heißsiegelzeit eine Funktion der Geschwindigkeit ist; **dadurch gekennzeichnet, dass** die Vorrichtung außerdem eine Zähleinrichtung (39) zur Messung der Heißsiegelzeit aufweist; sowie eine Betätigungseinrichtung (37), die mit der ersten Betätigungseinrichtung (19) unabhängig von der Geschwindigkeit zusammenwirkt, um das Heißsiegelelement (11) aus der Arbeitsposition zurückzuziehen, wenn die Heißsiegelzeit einen vorgegebenen Grenzwert überschreitet; wobei die Betätigungseinrichtung (19) ein Betätigungselement (25) umfasst, das ein bewegliches Ausgangselement (20) besitzt, sowie ein Getriebe (18) welches zwischen dem beweglichen Ausgangselement (20) und dem Heißsiegelelement (11) zwischengeschaltet ist; wobei das Getriebe (18) einen Bereich (29) mit variabler Länge umfasst; und die zweite Betätigungseinrichtung (37) diese Länge variiert, um eine Bewegung auszugleichen, die durch die erste Betätigungseinrichtung (19) ausgeübt wird; und der Bereich (29) mit variabler Länge eine Messeinrichtung (29) umfasst, die durch zwei verbundene Hebel (30) gebildet wird, welche durch einen Zwischenbolzen (31) gelenkig miteinander und jeweils mit dem beweglichen Ausgangselement (20) durch ein erstes Gelenk (30a) und mit dem Heißsiegelelement (11) durch ein zweites Gelenk (30b) gelenkig verbunden sind; und die zweite Betätigungseinrichtung (37) mit dem Zwischenbolzen (31) verbunden ist, um eine Entfernung zwischen dem ersten und dem zweiten Gelenk (30a, 30b) zu variieren.

2. Vorrichtung nach Anspruch 1, bei welcher die erste Betätigungseinrichtung (19) einen angetriebenen Nocken (25) umfasst, welcher um eine entsprechende Achse rotiert; und das bewegliche Ausgangselement (20) ein Schwingarm (20) ist, welcher ein erstes Ende aufweist, das mit dem Nocken (25) über eine Stößelrolle (23) in Verbindung steht, sowie ein zweites Ende, das an einem Ende des Getriebes (18) angelenkt ist.

## Revendications

1. Dispositif d'emballage de paquets de cigarettes comprenant un convoyeur (3) destiné à fournir une succession régulière de paquets (2) par étapes et à une vitesse donnée le long d'un chemin d'emballage (9), le long duquel une feuille (41) de matériau d'emballage thermosoudable est repliée autour de chaque paquet (2), de sorte que, au moins une première et une seconde partie (42, 43) de la feuille (41) se superposent l'une au-dessus de l'autre ; au moins un poste de thermosoudage (10) disposé le long dudit chemin (9) ; un élément de thermosoudage mobile (11) disposé audit poste de thermosoudage (10) ; et des premiers moyens de commande (19) connectés audit élément de thermosoudage (11), et grâce auxquels ledit élément de thermosoudage (11) est déplacé et maintenu pendant une durée de thermosoudage donnée dans une position de travail de thermosoudage, dans laquelle l'élément de thermosoudage (11) est positionné de manière à être en contact avec ladite feuille (41) aux dites parties superposées (42, 43) de la feuille (41) ; ladite durée de thermosoudage étant fonction de ladite vitesse ; le dispositif étant **caractérisé en ce qu'**il comprend également des moyens de comptage (39) destinés à mesurer ladite durée de thermosoudage ; et des seconds moyens de commande (37) interagissant avec lesdits premiers moyens de commande (19) indépendamment de ladite vitesse, afin de retirer ledit élément de thermosoudage (11) de sa position de travail lorsque ladite durée de thermosoudage dépasse une valeur limite donnée ; lesdits premiers moyens de commande (19) comprenant des moyens de commande (25) comportant un élément de sortie mobile (20), et une transmission (18) disposée entre ledit élément de sortie mobile (20) et ledit élément de thermosoudage (11) ; ladite transmission (18) comprenant une partie (29) à longueur variable ; et lesdits seconds moyens de commande (37) modifiant ladite longueur, afin de compenser un mouvement imprimé par lesdits premiers moyens de commande (19) ; ladite partie (29) à longueur variable comprenant un calibre (29) défini par deux bielles (30) articulées l'une par rapport à l'autre par un axe intermédiaire (31), et respectivement articulées par rapport audit élément de sortie mobile (20) par une première articulation (30a), et par rapport audit élément de thermosoudage (11) par une seconde articulation (30b) ; et lesdits seconds moyens de commande (37) étant connectés audit axe intermédiaire (31) afin de modifier une distance entre ladite première et ladite seconde articulation (30a, 30b).

2. Dispositif selon la revendication 1, dans lequel lesdits premiers moyens de commande (19) comprennent une came entraînée (25) en rotation autour d'un axe respectif ; ledit élément de sortie mobile (20) comprenant un culbuteur (20) dont une première extrémité est connectée à ladite came (25) par un poussoir (23), et une seconde extrémité est en articulation à une extrémité de ladite transmission (18).
